# EUROPÄISCHE PATENTSCHRIFT

(11) **EP 1 597 114 B1**
(45) Veröffentlichungstag und Bekanntmachung des Hinweises auf die Patenterteilung: **18.04.2007**
(21) Anmeldenummer: 04713514.0
(22) Anmeldetag: 23.02.2004
(51) Int. Cl.: B60R 11/02

(54) **HALTEVORRICHTUNG FÜR MOBILE BENUTZEREINRICHTUNGEN**
RETAINING DEVICE FOR MOBILE USER DEVICES
DISPOSITIF DE SUPPORT POUR DISPOSITIFS UTILISATEUR MOBILE

(30) Priorität: 25.02.2003 DE 10308189
(43) Veröffentlichungstag der Anmeldung: 23.11.2005
(73) Patentinhaber: Audioton Kabelwerk GmbH Zweigniederlassung Scheinfeld, 91443 Scheinfeld (DE)
(72) Erfinder: CULLMANN, Wolfgang, 90579 Langenzenn (DE)
(74) Vertreter: Lelgemann, Karl-Heinz
(86) Internationale Anmeldenummer: PCT/DE2004/000338
(87) Internationale Veröffentlichungsnummer: WO 2004/076238

(56) Entgegenhaltungen:
- EP-A- 1 278 356
- DE-A- 3 738 389
- DE-A- 4 107 995
- DE-A- 10 131 169
- DE-U- 29 814 956
- US-A- 5 885 088
- US-A- 5 961 337
- US-B1- 6 341 218

## Beschreibung

Die Erfindung betrifft eine Haltevorrichtung zur mechanischen und elektrischen Verbindung einer mobilen Benutzereinrichtung, insbesondere eines Mobilfunktelefons oder eines PDA's (PDA = Personal Digital Assistant) mit einem Fahrzeug. Die Erfindung betrifft weiter ein Grundteil für die Haltevorrichtung zur permanenten Befestigung im Fahrzeug und ein Halteteil der Haltevorrichtung zur Aufnahme der mobilen Benutzereinrichtung.

DE 298 14 956 U1 beschreibt eine Mobiltelefonhalterung für ein Fahrzeug, die aus einem Grundteil und einem Telefonhalteteil besteht, das an die Form des Mobilfunktelefons angepaßt der Aufnahme des mobilen Telefons dient. Das Grundteil ist zur permanenten Befestigung im Fahrzeug vorgesehen. Es weist hierbei drei Hakenelemente auf, mittels der das Grundteil mit dem Telefonhalteteil verbunden werden kann. Bei dem Grundteil handelt es sich hierbei um eine reine Halteplatte, die lediglich der mechanischen Befestigung des Telefonhalteteils dient. Das Telefonhalteteil ist mit einem Anschlußkabel versehen, das das Telefonhalteteil mit einer Freisprecheinrichtung verbindet.

Dokument US 6,341,218 B1 beschreibt eine Haltevorrichtung zur mechanischen und elektrischen Verbindung einer mobilen Benutzereinrichtung, insbesondere eines Mobilfunktelefons oder eines PDA's, mit einem Fahrzeug, wobei die Haltevorrichtung ein Grundteil zur permanenten Befestigung im Fahrzeug und ein Halteteil zur Aufnahme der mobilen Benutzereinrichtung aufweist, wobei
das Grundteil mindestens ein starres erstes Hakenelement und mindestens ein gefedertes zweites Hakenelement aufweist, die voneinander beabstandet nach oben wegstehend auf der dem Halteteil zugewandten Oberseite des Grundteils angeordnet sind, wobei das Grundteil ein elektrisches Verbindungselement zur elektrischen Verbindung des Grundteils mit dem Halteteil aufweist, das auf der dem Halteteil zugewandten Oberseite des Grundteils zwischen dem mindestens einen starren ersten Hakenelement und dem mindestens einen gefederten zweiten Hakenelement angeordnet ist, wobei die dem Grundteil zugewandte Unterseite des Halteteils mindestens eine erste Ausnehmung zur Verrastung mit einem ersten Hakenelement und mindestens eine von dieser beabstandet angeordnete zweite Ausnehmung zur Verrastung mit einem zweiten Hakenelement aufweist, und wobei das Halteteil ein elektrisches Verbindungselement zur elektrischen Verbindung des Halteteils mit dem Grundteil aufweist, das auf der dem Grundteil zugewandten Unterseite des Halteteils zwischen der mindestens einen ersten Ausnehmung und der mindestens einen zweiten Ausnehmung angeordnet ist.

Der Erfindung liegt nun die Aufgabe zugrunde, die mechanische und die elektrische Verbindung einer mobilen Benutzereinrichtung mit einem Fahrzeug zu verbessern.

Diese Aufgabe wird von einer Haltevorrichtung zur mechanischen und elektrischen Verbindung einer mobilen Benutzereinrichtung gelöst, die ein Grundteil zur permanenten Befestigung im Fahrzeug und ein Halteteil zur Aufnahme der mobilen Benutzereinrichtung aufweist, wobei das Grundteil mindestens ein starres erstes Hakenelement und mindestens ein gefedertes zweites Hakenelement aufweist, die voneinander beabstandet nach oben wegstehend auf der dem Halteteil zugewandten Oberseite des Grundteils angeordnet sind, das Grundteil ein elektrisches Verbindungselement zur elektrischen Verbindung des Grundteils mit dem Halteteil aufweist, das auf der dem Halteteil zugewandten Oberseite des Grundteils zwischen dem mindestens einem starren ersten Hakenelement und dem mindestens einem gefederten zweiten Hakenelement angeordnet ist, die dem Grundteil zugewandte Unterseite des Halteteils mindestens eine erste Ausnehmung zur Verrastung mit einem ersten Hakenelement und mindestens eine von dieser beabstandet angeordnete zweite Ausnehmung zur Verrastung mit einem zweiten Hakenelement aufweist, und das Halteteil ein elektrisches Verbindungselement zur elektrischen Verbindung des Halteteils mit dem Grundteil aufweist, das auf der dem Grundteil zugewandten Unterseite des Halteteils zwischen der mindestens einen ersten Ausnehmung und der mindestens einen zweiten Ausnehmung angeordnet ist. Diese Aufgabe wird weiter von einem derartigen Grundteil und einem derartigen Halteteil für eine Haltevorrichtung zur mechanischen und elektrischen Verbindung einer mobilen Benutzungseinrichtung mit dem Fahrzeug gelöst.

Mittels der Erfindung wird eine sichere mechanische und elektrische Verbindung zwischen Grundteil und Halteteil erreicht:

Durch die Verrastung der nach oben wegstehenden ersten und zweiten Hakenelemente und der ersten und zweiten Ausnehmungen des Halteteils wird das Halteteil zuverlässig temporär festgelegt, ein gleichmäßiger Anpreßdruck zwischen den elektrischen Verbindungselementen des Grundteils und des Halteteils erzeugt und die einander zugeordneten Kontaktelemente dieser elektrischen Verbindungselemente zuverlässig zueinander fixiert. Es wird damit gleichzeitig eine temporäre mechanische und eine temporäre elektrische Verbindung zwischen Halteteil und Grundteil hergestellt, die sowohl von der mechanischen Belastbarkeit als auch von der elektrischen Kontaktsicherheit den hohen in einem Fahrzeug bestehenden Anforderungen (Vibration, hohe Temperaturunterschiede, Verschmutzung, Crash-Sicherheit) gewachsen ist.

Besonders vorteilhaft ist hierbei auch, daß eine derartige elektrische und mechanische Verbindung mit einem geringen Aufwand an beweglichen Teilen realisierbar ist, wodurch sich die Betriebssicherheit erhöht und Produktionskosten gesenkt werden.

Vorteilhafte Ausgestaltungen der Erfindung sind in den Unteransprüchen bezeichnet.

Es ist zweckmäßig, daß das Grundteil ein mittig angeordnetes erstes Hakenelement und zwei beabstandet zueinander angeordnete zweite Hakenelemente aufweist. Das Grundteil und das Halteteil werden demnach im Sinn einer Dreipunkt-Halterung gegenseitig fixiert, wodurch bereits bei sehr geringem produktionstechnischen Aufwand eine ausreichende Fixierung der elektrischen Verbindungselemente und ein gleichmäßiger Anpreßdruck zwischen den Kontaktelementen dieser elektrischen Verbindungselemente erzielbar sind.

Weiter ist es zweckmäßig, daß die zweiten Hakenelemente in Längsrichtung des Grundteils beweglich federnd gelagert sind und daß die Haken des ersten starren Hakenelements und die Haken des zweiten Hakenelements gegenläufig orientiert sind. Hierdurch wir die Vibrations-Sicherheit der Verbindung erhöht.

Gemäß eines bevorzugten Ausführungsbeispiels der Erfindung weist das Grundteil weiter mindestens ein drittes gefedertes Hakenelement auf, daß zwischen dem ersten Hakenelement und dem elektrischen Verbindungselement angeordnet ist. Entsprechend weist das Halteteil mindestens eine dritte Ausnehmung zur Verrastung mit einem dritten Hakenelement des Grundteils auf, die zwischen der ersten Ausnehmung und dem elektrischen Verbindungselement angeordnet ist. Durch die beidseitig zu dem elektrischen Verbindungselement angeordneten Hakenelemente wird die gegenseitige Fixierung der elektrischen Verbindungselemente zueinander weiter verbessert und der Anpreßdruck der Kontaktelemente auch bei starken Vibrationen und Temperaturschwankungen konstant gehalten. Weiter kann hierdurch eine Verform des Halteteils oder des Grundteils durch die in der Raststellung angreifenden Kräfte weitestgehend vermieden werden.

Hierbei ist es besonders vorteilhaft, daß das oder die dritten Hakenelemente um 90 ° gegenüber dem oder den zweiten Hakenelementen versetzt beweglich federnd gelagert sind. Hierdurch wird die Vibrations-Sicherheit der elektrischen Verbindung sowohl in Quer- als auch in Längsrichtung verbessert, so daß elektrische Kontaktprobleme auch bei langjährigem Gebrauch sicher vermieden werden. Hierbei hat es sich als besonders vorteilhaft erwiesen, daß zwei dritte Hakenelemente gegenläufig quer zur Längsrichtung des Grundteils beweglich federnd gelagert werden. Hierdurch wird eine spiefrei und vibrationssichere Verbindung bereitgestellt.

Gemäß eines weiteren bevorzugten Ausführungsbeispiels der Erfindung weist das Grundteil demnach mindestens ein zweites Hakenelement auf, daß in Längsrichtung des Grundteils beweglich federnd gelagert ist und weist zwei dritte Hakenelemente auf, die gegenläufig quer zur Längsrichtung des Grundteils beweglich federnd gelagert sind. Durch die beiden um 90 ° gegeneinander verdrehten Schnappverbindungen, von denen die in Längsrichtung wirkende Schnappverbindung durch Kombination eines starren und eines beweglichen Hakenelements wirkt, wird ein hohes Maß an Vibration- und Alterungsbeständigkeit gepaart mit hohem Bedienkomfort erzielt. Das starre Hakenelement dient hierbei als Angelpunkt, der auch bei widrigen Umständen (schlechte Lichtverhältnisse, Vibration) eine schnelle Verrastung beider um 90° versetzten Rasterverbindungen ermöglicht. Damit gewährleistet eine derartige Haltevorrichtung auch ein hohes Maß an Bedienkomfort.

Durch die beiden im folgenden beschriebenen Maßnahmen ist es weiter möglich, die Gleichmäßigkeit des Anpreßdruckes der beiden zusammenwirkenden Verbindungselemente zu verbessern und damit die Ausfallsicherheit der elektrischen Verbindung zwischen Grundteil und Halteteil zu verbessern:

Zum einen ist es möglich, zwei zweite Hakenelemente vorzusehen, die in unmittelbarer Nähe der Ecken des elektrischen Verbindungselements des Grundteils angeordnet sind. Entsprechend wird das Halteteil mit zwei zweiten Ausnehmungen ausgestaltet, die ebenfalls in unmittelbarer Nähe der Ecken des elektrischen Verbindungselements des Halteteils angeordnet sind. Weiter ist es möglich, zwei dritte federnde Hakenelemente vorzusehen, die einander gegenüberliegend in unmittelbarer Nähe der Längskanten des Grundteils angeordnet sind. Entsprechend wird das Halteteil mit zwei dritten Ausnehmungen versehen, die einander gegenüberliegend in unmittelbarer Nähe der Längskante des Halteteils angeordnet sind.

Um eine sicheres und komfortables Lösen der Verbindung zwischen Grundteil und Halteteil zu ermöglichen, wird gemäß eines bevorzugten Ausführungsbeispiels der Erfindung folgendes vorgeschlagen:

Das Grundteil weist ein in Längsrichtung des Grundteils beweglich federnd gelagertes Schieberelement auf, das mit dem mindestens einen zweiten Hakenelement verbunden ist. Weiter weist das Grundteil mindestens eine quer zur Längsrichtung des Grundteils beweglich federnd gelagertes Betätigungselement auf. Das Schieberelement und das Betätigungselement weisen in berührender Anlage stehende abgeschrägte Flächen auf, wodurch eine Querbewegung des mindestens einen Betätigungselements in eine Längsbewegung des Schieberelements umgesetzt wird.

Hierbei ist es vorteilhaft, daß das oder die dritten Hakenelemente mit dem mindestens einen Betätigungselement verbunden werden. Weiter ist es vorteilhaft, daß das Grundteil zwei dritte Hakenelemente und zwei gegenläufig angeordnete Betätigungselemente aufweist, wobei ein drittes Hakenelement mit dem einen Betätigungselement und das andere dritte Hakenelement mit dem anderen Betätigungselement verbunden sind und hierbei die Haken der beiden Hakenelemente gegenläufig orientiert sind. Hierdurch ergeben sich die bereits angeführten Vorteile einer besonders vibrations- und alterungsbeständigen elektrischen Verbindung zwischen dem Grundteil und dem Halteteil gepaart mit einem hohen Bedienkomfort beim Festsetzen und Lösen der Verbindung und einer robusten langlebigen Mechanik. Weiter werden bei der Verrastung der dritten Hakenelemente die zweiten Hakenelemente leicht mitbewegt, so daß der insgesamt für die Verrastung notwendige Kraftaufwand verringert und die Flanken der stärker belasteten zweiten Ausnehmungen entlastet werden.

Weiter ist es zweckmäßig, daß das Grundteil eine erste Feder aufweist, die auf das Schieberelement eine in Richtung des ersten Hakenelements gerichtete Kraft ausübt, und daß das Grundteil eine zweite Feder aufweist, die auf das mindestens eine Betätigungselement einen in Richtung der Außenseite des Grundteils gerichtete Kraft ausübt. Hierdurch ergibt sich eine einfache und kostengünstige Verriegelungsmechanik.

Gemäß eines bevorzugten Ausführungsbeispiels der Erfindung weisen die elektrischen Verbindungselemente mehrere in einer oder mehreren Reihen angeordnete elektrisch leitfähige Kontaktelemente auf, wobei die Kontaktelemente des Grundteils und die Kontaktelemente des Halteteils bei Verrastung des Grundteils und des Halteteils miteinander fluchtenden an ihren einander zugewandten Stirnenden in berührender Anlage stehen. Durch eine derartige symmetrische Gestaltung eines elektrischen Verbindungselements in Kombination mit der hier verwendeten Verrastung wird eine gleichmäßige Verteilung des Anpreßdrucks der Kontaktelemente gefördert, wodurch die elektrische Kontaktierung verbessert wird. Hierbei ist es vorteilhaft, ein elektrisches Verbindungselement sowohl zur Übertragung von HF als auch zur Übertragung von NF Signalen zu verwenden. So werden beispielsweise zwei oder mehr benachbarte Kontaktelemente zur Übertragung von HF Signalen und ein oder mehrere der übrigen Kontaktelemente zur Übertragung von NF Signalen oder zur Stromversorgung verwendet. Hierdurch kann die Verwendung einer Koaxialsteckverbindung vermieden werden, durch die sich die Anfälligkeit für elektrische Kontaktprobleme erhöhen würde. Besonders vorteilhaft ist es hierbei, das elektrische Verbindungselement als Verbindungselement mit einer dreireihigen Anordnung von elektrisch leitfähigen Kontaktelementen auszugestalten.

Es ist zweckmäßig, daß das elektrische Verbindungselement des Grundteils mehrere elektrisch leitfähige Kontaktelemente aufweist, die in ihren Stirnflächen Kontaktflächen ausbilden, und daß das elektrische Verbindungselement des Halteteils mehrere elektrisch leitfähige Kontaktelemente aufweist, die in Form von gefederten Kontaktstiften ausgebildet sind. Hierdurch wird die gesamte Haltevorrichtung weniger anfällig gegen Verschmutzung und Staub.

Im folgenden wird die Erfindung anhand von mehreren Ausführungsbeispielen unter Zuhilfenahme der beiliegenden Zeichnungen beispielhaft erläutert:
- Fig. 1: zeigt eine perspektivische Ansicht eines erfindungsgemäßen Grundteils für eine erfindungsgemäße Haltevorrichtung zur mechanischen und elektrischen Verbindung einer mobilen Benutzereinrichtung mit einem Fahrzeug.
- Fig. 2: zeigt eine perspektivische Ansicht eines erfindungsgemäßen Halteteils zur Verwendung mit dem Grundteil nach Fig. 1.
- Fig. 3: zeigt eine perspektivische Darstellung von Teilkomponenten einer erfindungsgemäßen Haltevorrichtung.
- Fig. 4: zeigt eine räumliche Darstellung zweier elektrischer Verbindungselemente.
- Fig. 5: zeigt eine Schnittdarstellung eines Kontaktelements.
- Fig. 6: zeigt eine Funktionsdarstellung der Unterseite des Grundteils nach Fig. 1.
- Fig. 7: zeigt eine Schnittdarstellung des Grundteils und des Halteteils in zusammengefügtem Zustand.

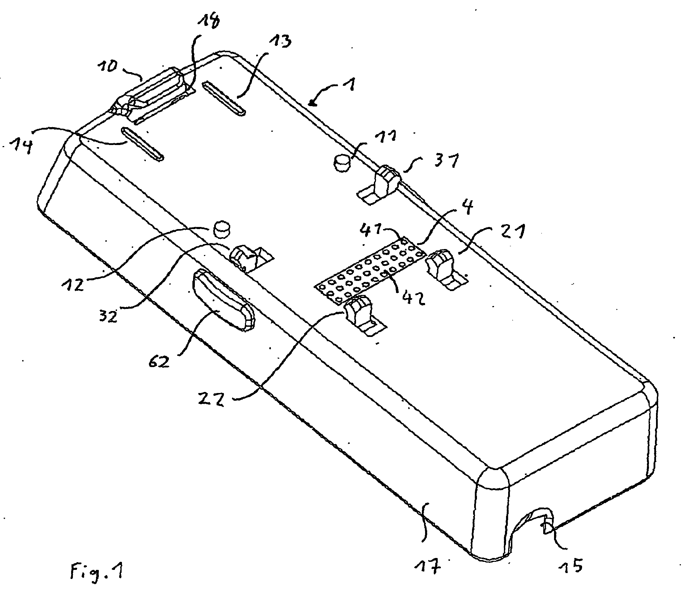

Fig. 1 zeigt ein Grundteil einer Haltevorrichtung für mobile Benutzereinrichtungen, insbesondere Mobiltelefone oder PDA's (PDA = Personal Digital Assistant). Derartige Benutzereinrichtungen verfügen über Ein- und Ausgabeschnittstellen zur Kommunikation mit einem Benutzer, beispielsweise über ein Display, ein Tastenfeld, ein Mikrophon, einen Lautsprecher und über eine Videokamera: Weiter verfügen sie über eine Schnittstelle zur Kommunikation über ein Kommunikationsnetz, vorzugsweise zur Kommunikation über ein funkgestütztes Kommunikationsnetz. Beispielsweise verfügen sie über ein Funkteil zur Kommunikation gemäß dem GSM-Standard oder UMTS-Standard oder zur Kommunikation über ein Wireless LAN (GSM = Global System for Mobile Communication, UMTS = Universal Mobile Telecommunication System). Es ist jedoch auch möglich, daß sie über eine BlueTooth- oder eine Infrarot-Schnittstelle (z.B. für den Zugang zum Internet) verfügen.

Das Grundteil 1 weist ein Gehäuse 17, mehrere Hakenelemente 21, 22, 31, 32 und 10, ein elektrisches Verbindungselement 4 und zwei Betätigungselemente auf, von denen in Fig. 1 ein Betätigungselement 62 gezeigt ist. Das Verbindungselement 4 ist ein elektrisches Verbindungselement und weist mehrere in Reihen angeordnete elektrisch leitfähige Kontaktelemente 41 sowie einen Grundkörper 42 aus einem nicht leitfähigen Material auf.

Das Gehäuse 17 ist rechteckförmig mit abgeschrägten Kanten ausgeformt. Die Form des Gehäuses 17 ist hierbei an die Form des mit ihr zu verwendenden Halteteils angepaßt, die wiederum der Form der aufzunehmenden mobilen Benutzereinrichtung, in diesem Fall eines Mobilfunktelefons, nachempfunden ist. Je nach Art der verwendeten mobilen Benutzereinrichtung kann die Form des zu verwendenden Gehäuses von der in Fig. 1 gezeigten Form des Gehäuses 17 abweichen.

Neben den in Fig. 1 gezeigten Komponenten weist das Grundteil 1 weiter Befestigungsmittel zur Befestigung des Grundteils im Fahrzeug auf. Beispielsweise verfügt das Grundteil über eine Bodenplatte, die über Löcher zur Verschraubung der Grundplatte mit Fahrzeugteilen, Ausnehmungen zur Verrastung der Grundteile mit Fahrzeugteilen oder Flächen zur Verklebung der Grundplatte mit Fahrzeugteilen versehen ist. Weiter ist es auch möglich, daß das Grundteil eine in dem Gehäuse 17 angeordnete Elektronik aufweist, die beispielsweise Funktionen wie die einer Freisprecheinrichtung erbringt. Das Gehäuse 17 weist weiter mehrere Ausnehmungen auf. So ist in Fig. 1 beispielsweise eine Ausnehmung 15 gezeigt, die als Betätigungsausnehmung für ein Lautstärkenrad dient. Weiter sind Ausnehmungen vorgesehen, die beispielsweise dem Anschluß von Steckern, Mikrophonen oder der Aufnahme einer Datenbuchse dienen, oder die Schlitze zur Aufnahme von Prozessor-/Speicherkarten ausformen. Weiter ist in Fig. 1 eine Ausnehmung 18 unterhalb des Hakenelements 10, Ausnehmungen zur Führung der Hakenelemente 21, 22, 31 und 32, eine Ausnehmung zur Durchführung des elektrischen Verbindungselements 4 und eine Ausnehmung zur Durchführung des Betätigungselements 62 gezeigt.

Die dem Halteteil zugewandte Oberseite des Grundteils 1 ist vorzugsweise, wie auch in Fig. 1 dargestellt, weitestgehend eben und recheckförmig ausgestaltet. Aus dieser ebenen Fläche ragen lediglich die Hakenelemente 10, 21, 22, 31, 32, Zentrierelemente 11 und 12 und Stege 13 und 14 hervor. Durch diese weitestgehend ebene Flächengestaltung wird die Anfälligkeit der elektrischen und mechanischen Verbindung gegenüber Verschmutzung und Verstaubung verringert. Die beiden Zentrierelemente 11 und 12 dienen der zusätzlichen Zentrierung des Halteteils gegenüber dem Grundteil im verrasteten Zustand. Es ist natürlich auch möglich, eine andere Anzahl von Zentrierelementen 11 und 12 zu wählen, eine andere Form von Zentrierelementen zu wählen oder diese anders zu positionieren. Bei der Positionierung der Zentrierelemente 11 und 12 ist hierbei jedoch zu beachten, daß diese nicht zu nah an dem Hakenelement 10 und nicht zu weit vom Hakenelement 10 entfernt positioniert werden, um den Bedienkomfort nicht zu verringern. Vorzugsweise sind die Zentrierelemente 11 und 12 zwischen dem Hakenelement 10 und dem elektrischen Verbindungselement 4 möglichst in der Nähe der Seitenkanten des Gehäuses 17 zu positionieren. Es ist jedoch auch möglich, auf die Zentrierelemente 11 und 12 zu verzichten.

Die Stege 13 und 14 dienen dazu, eine stabile Verrastung des festen Hakenelements 10 in der zugeordneten Ausnehmung des Halteteils zu gewährleisten. Die Höhe der Stege 13 und 14 ist hierbei recht gering und liegt etwa im Bereich von 0,2 bis 0,5 mm. Auf die Ausnehmung 18 und die Stege 13 und 14 könnte natürlich auch verzichtet werden.

Das Hakenelement 10 ist mittig am Kopfende des Gehäuses 17 positioniert. Das Hakenelement 10 ist hierbei breiter als die Hakenelemente 21, 22, 31 und 32 ausgeformt und hat eine Breite von ca. 1,5 cm. Bei dem Hakenelement 10 handelt es sich um ein starres Hakenelement. Dies bedeutet, daß das Hakenelement zur Verrastung mit der zugeordneten Ausnehmung des Halteteils nicht zurückschnappt. Es ist natürlich auch möglich, zwei oder mehr starre Hakenelemente vorzusehen oder eine andere Breite für das Hakenelements 10 zu wählen.

Bei den Hakenelementen 31, 32, 21 und 22 handelt es sich um gefederte Hakenelemente, die zur Verrastung zurückschnappen und damit eine Verrastung ohne Längs- oder Querbewegung zwischen dem Halteteil und dem Grundteil ermöglichen.

Die Hakenelemente 21, 22, 32 und 31 sind wesentlich schmaler als das Hakenelement 10 ausgeformt. Beispielsweise haben die Hakenelemente 22, 21, 31 und 32 eine Breite von 4 mm. Die Hakenelemente 31, 32, 21 und 22 sind federnd gelagert, so daß sie eine Schnappbewegung von beispielsweise 3 mm zur Verrastung mit zugeordneten Ausnehmungen des Halteteils ausführen können. Hierfür ist es zum einen möglich, daß die Hakenelemente 21, 22, 31 und 32 unter Eingriff eines oder mehrerer Federelemente beweglich gelagert sind, oder daß die Hakenelemente fest mit dem Gehäuse 17 verbunden sind und aufgrund ihrer Formgebung und des für sie verwendeten Materials bei der Verrastung federnd zurückschnappen.

Auf die Hakenelemente 31 und 32 könnte auch verzichtet werden. Weiter wäre es auch möglich, anstelle der Hakenelemente 21 und 22 ein mittig angeordnetes Hakenelement vorzusehen, daß vom Hakenelement 10 aus betrachtet hinter dem elektrischen Verbindungselement 4 angeordnet ist. Weiter ist es natürlich auch möglich anstelle der Hakenelemente 21 und 22 drei oder mehr in Reihe angeordnete Hakenelemente vorzusehen. Wesentlich ist hierbei, daß das elektrische Verbindungselement 4 zwischen dem starren Hakenelement 10 und diesen gefederten Hakenelementen angeordnet ist. Dies bedeutet, daß die Entfernung zwischen dem starren Hakenelement 10 und dem federnden Hakenelement größer als die Entfernung zwischen dem festen Hakenelement 10 und dem elektrischen Verbindungselement ist. Wie in Fig. 1 gezeigt, sind die Haken des Hakenelements 10 einerseits und die Haken der Hakenelemente 21 und 22 andererseits gegenläufig orientiert, wobei die Hakenelemente 21 und 22 in Längsrichtung des Grundteiles beweglich federnd gelagert sind. Weiter sind die Hakenelemente 21 und 22, wie in Fig. 1 gezeigt, in unmittelbarer Nähe der Ecken des elektrischen Verbindungselements 4 angeordnet. Die Entfernung zwischen den Ecken des Verbindungselements 41 und den Hakenelementen 21 und 22 beträgt beispielsweise 4 mm und ist so bemessen, daß die Hakenelemente bei Aufrechterhaltung eines problemlosen Einsatzes des elektrischen Verbindungselements 4 möglichst nah an den Ecken des elektrischen Verbindungselements 4 angeordnet sind.

Die Hakenelemente 31 und 32 sind zwischen dem elektrischen Verbindungselement 4 und dem Hakenelement 10 in unmittelbarer Nähe der Längskanten des Grundteils 1 angeordnet. Wie in Fig. 1 erkennbar, schließt das Hakenteil 32 beispielsweise unmittelbar an die Abrundung der Seitenkante des Gehäuseteils 17 an und befindet sich demnach am Rande der planaren Oberseite des Gehäuses 17. Die beiden Hakenelemente 31 und 32 sind hierbei gegenläufig quer zur Längsrichtung des Grundteils 1 beweglich federnd gelagert, so daß die Hakenelemente 21 und 22 einerseits und die Hakenelemente 31 und 32 andererseits um 90 ° gegeneinander versetzt beweglich federnd gelagert sind. Gegenläufig bedeutet hierbei, daß die Hakenelemente 31 und 32 in gegenläufige Richtungen bewegt werden. Wie in Fig. 1 gezeigt, sind die Haken der Hakenelemente 31 und 32 in Richtung der jeweiligen Außenkante orientiert und die Hakenelemente 31 und 32 werden bei der Verrastung aufeinander zubewegt.

Es ist natürlich auch möglich, daß die Haken der Hakenelemente 31 und 32 nach innen orientiert sind und die Hakenelemente bei der Verrastung nach außen bewegt werden.

Fig. 2 zeigt eine Ansicht der dem Grundteil 1 zugewandten Unterseite eines Halteteils 2, das zur Aufnahme der mobilen Benutzereinrichtung dient. Die Vorderseite des Halteteils 2 ist hierbei derart ausgeformt, daß eine mechanische und eine elektrische Verkopplung zwischen der mobilen Benutzereinrichtung und dem Halteteil möglich ist. So weist das Vorderteil des Halteteils 2 beispielsweise eine Formgebung auf, die an die Form der aufzunehmenden mobilen Benutzereinrichtung angepaßt ist und die so ein Einlegen der mobilen Benutzereinrichtung in das Halteteil ermöglicht. Weiter verfügt sie über Verriegelungsmechanismen, die eine lösbare mechanische Verbindung zwischen Benutzereinrichtung und Halteteil ermöglichen. Weiter verfügt sie über ein oder mehrere elektrische Verbindungselemente, beispielsweise einen entsprechend ausgeformten Stecker, mittels dem eine elektrische Verbindung zwischen der mobilen Benutzereinrichtung und dem Halteteil hergestellt werden kann. Weiter ist es auch möglich, daß das Halteteil eine Elektronik aufweist, die zwischen dem Grundteil und der mobilen Benutzereinrichtung ausgetauschte elektrische Signale und Informationen bearbeitet und/oder weitergeleitet.

Von den Komponenten des Halteteils 2 sind in Fig. 2 ein Teilgehäuse 28 mit Rastausnehmungen 11, 24, 23, 34 und 33, Zentrierausnehmungen 25 und 26 und Ausnehmungen 27 zur Verschraubung des Teilgehäuses 28 mit dem die Oberseite des Halteteils bildenden Teilgehäuse des Halteteils gezeigt.

Die Ausnehmungen 11, 23, 24, 33 und 34 sind entsprechend der ihnen zugeordneten Hakenelemente 10, 22, 21, 32 und 31 auf der Unterseite des Halteteils angeordnet. Die Unterseite des Halteteils ist weiter ebenso wie die Oberseite des Grundteils weitestgehend eben ausgeformt. Die Zentrierausnehmungen 25 und 26 sind entsprechend den ihnen zugeordneten Zentrierelementen 12 und 11 auf der Unterseite des Halteteils 2 angeordnet. Das Halteteil 2 weist weiter ein entsprechend dem elektrischen Verbindungselement 4 des Grundteils 1 angeordnetes elektrisches Verbindungselement 5 auf.

Anhand von Fig. 3 wird nun verdeutlicht, wie ein Benutzer das Halteteil 2 mit dem Grundteil 1 verrastet.

Fig. 3 zeigt das Grundteil 1 mit den Hakenelementen 21, 22, 31, 32 und 10 mit dem elektrischen Verbindungselement 4, mit dem Zentrierelement 11 und mit dem Betätigungselement 62. Fig. 3 zeigt weiter das Teilgehäuse 28 des Halteteils 2 mit den Rastausnehmungen 23, 24, 33 und 34 und mit den Zentrierausnehmungen 25 und 26.

Wie in Fig. 3 dargestellt, wird vom Benutzer das Hakenelement 10 in die zugeordnete Ausnehmung 11 des Halteteils 2 eingeführt. Das Hakenelement 10 und die Ausnehmung 11 dienen als Angelpunkt einer nun folgenden Kippbewegung mittels der die Unterseite des Halteteils 2 gegen die Oberseite des Grundteils 1 geführt und schließlich verrastet wird.

Fig. 4 zeigt beispielhaft den Aufbau der elektrischen Verbindungselemente 4 und 5.

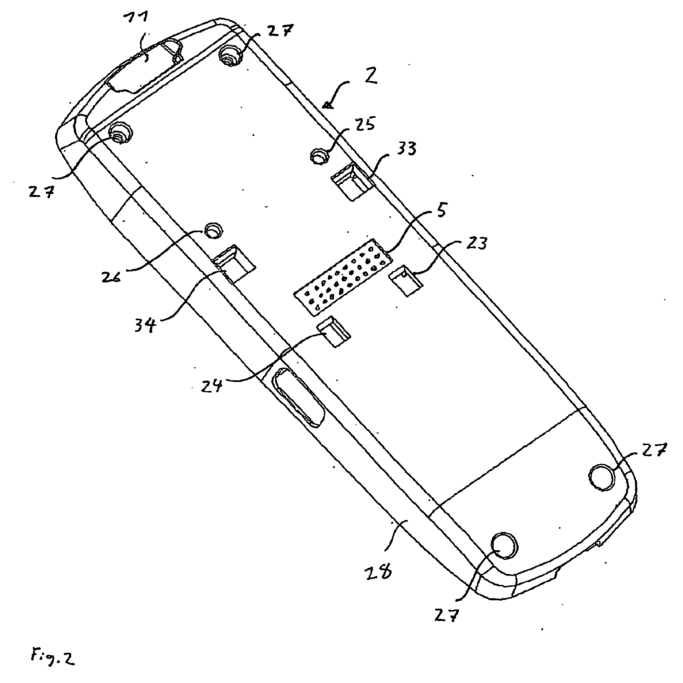

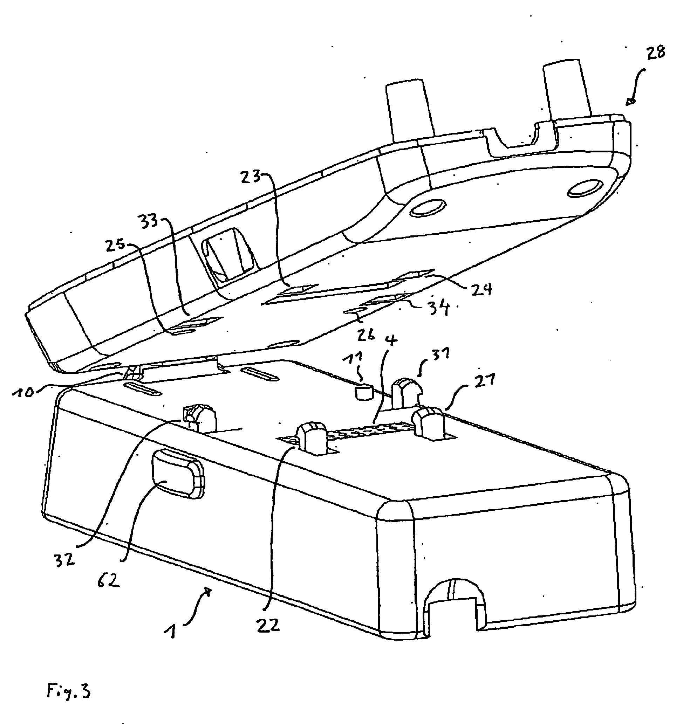

Wie in Fig. 4 gezeigt, weist das Verbindungselement 4 einen Grundkörper aus einem elektrisch nicht leitfähigen Material, beispielsweise aus Kunststoff, auf, in dem mehrere elektrisch leitfähige Kontaktelemente angeordnet sind. Ebenso weist das elektrische Verbindungselement 5 vorzugsweise einen Grundkörper aus einem elektrisch nicht leitfähigen Material auf, indem ebenfalls mehrere elektrisch leitfähige Kontaktelemente angeordnet sind. Die Kontaktelemente des Verbindungselements 5 und die Kontaktelemente des Verbindungselements 4 sind derart in dem jeweiligen Grundkörper angeordnet, daß sie bei der Verrastung des Grundteils 1 und des Halteteils 2 miteinander fluchtend an ihren einander zugewandten Stirnenden in berührender Anlage stehen. Hierbei sind die Stirnenden der Kontaktelemente des Verbindungselements 4 vorzugsweise als Kontaktflächen und die Stirnflächen der Kontaktelemente des Verbindungselements 5 vorzugsweise als Kontaktstifte ausgebildet, die wie in Fig. 5 gezeigt federnd gelagert sind. So zeigt Fig. 5 schematisch ein Kontaktelement 51 mit einer Schraubenfeder 52 und einem Kontaktstift 53.

Es ist natürlich auch möglich, daß die Kontaktelemente der Verbindungselemente 4 und 5 anders ausgestaltet sind, beispielsweise als Kontaktfahnen, als beidseitig gefederte Kontaktflächen oder Kontaktschienen oder als koaxiale Steckverbindung.

Vorzugsweise dienen die Verbindungselemente 4 und 5 sowohl der Übertragung von HF als auch von NF Signalen. Beispielsweise dienen die mit 44 und 43 bezeichneten Kontaktelemente des Verbindungselements 4 der Übertragung von HF Signalen und die restlichen Kontaktelemente des Verbindungselements 4 der Übertragung von NF Signalen. Hierbei bildet das Kontaktelement 44 einen Innenleiter, der von mehreren mit Masse verbundenen Außenleitern, den Kontaktelementen 43, einen Wellenleiter bildet. Weiter wäre es auch möglich, eine HF Verbindung mittels eines Innenleiters und eines oder zweier benachbart liegender Außenleiter zu realisieren.

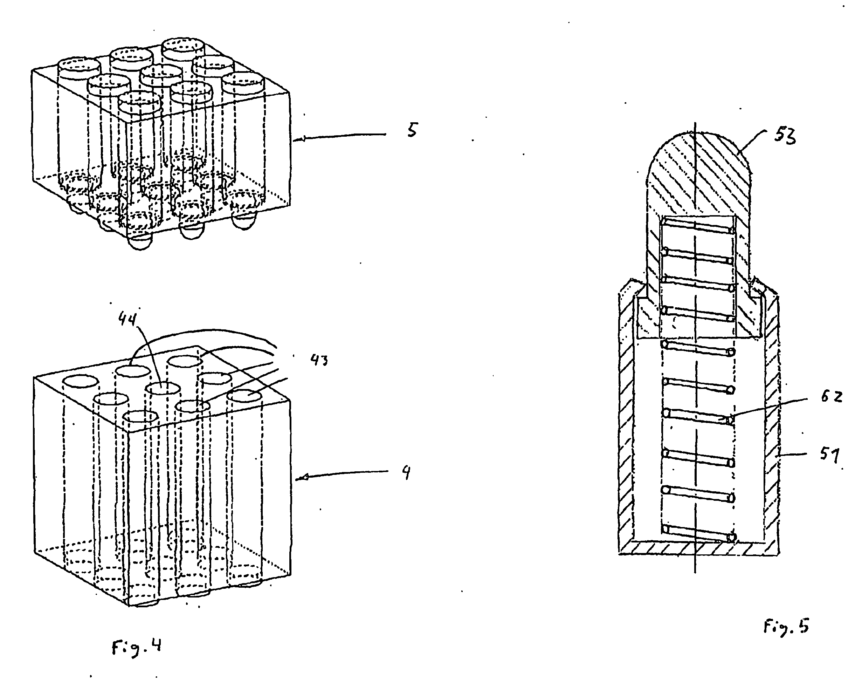

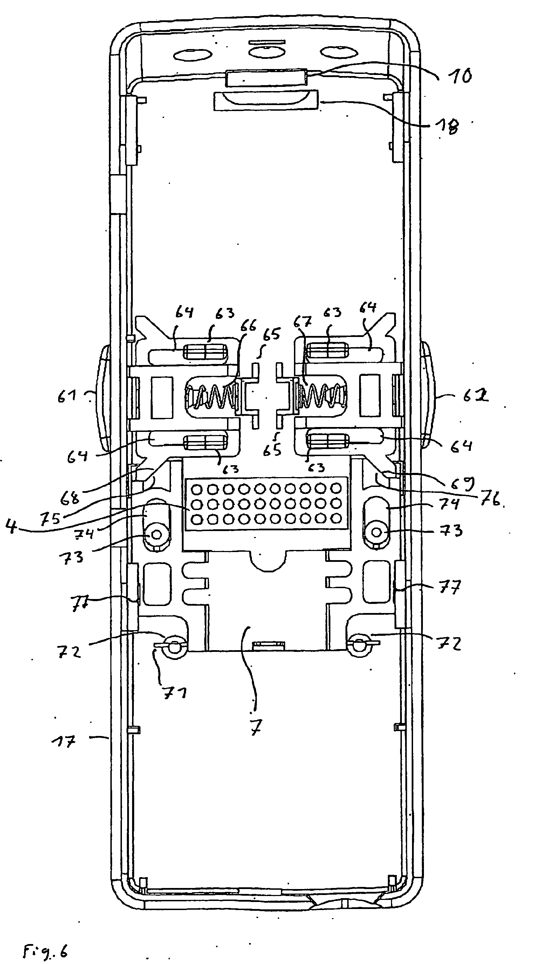

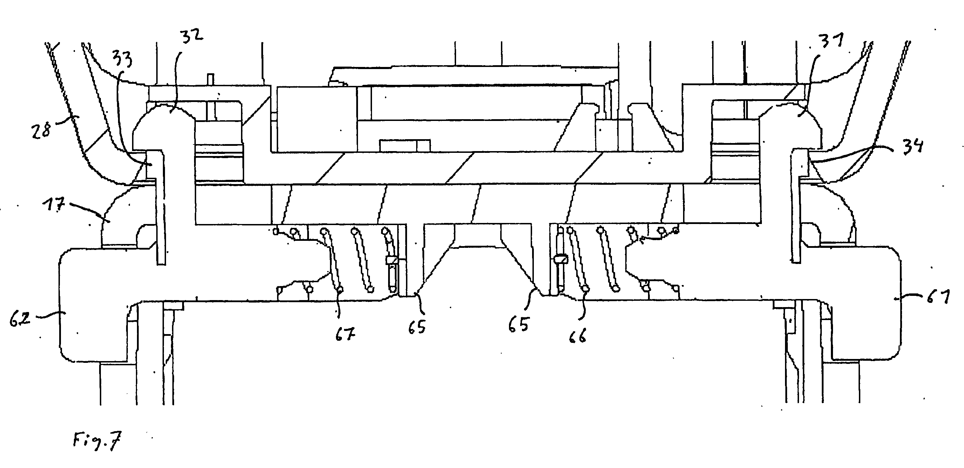

Anhand der Figuren 6 und 7 wird nun ein Mechanismus erläutert, mittels dem die Verrastung des Grundteils 1 mit dem Halteteil 2 vom Benutzer gelöst werden kann.

Fig. 6 zeigt eine Rückansicht des Gehäuses 17 mit der innerhalb des Gehäuses 17 liegenden Mechanik. Fig. 6 zeigt so das Gehäuse 17, ein Schieberelement 7, zwei Betätigungselemente 61 und 62, drei Federn 71, 66 und 67 und das elektrische Verbindungselement 4. Weiter ist im Kopfteil des Gehäuseteils 17 die Ausnehmung 18 sowie die Unteransicht des Hakenelements 10 erkennbar.

Das Schieberelement 7 weist zwei Langlöcher 74 auf, durch die zwei mit dem Gehäuse 17 verbundene Anschraubdome 73 für eine Leiterplatte geführt sind. Weiter weist das Gehäuse 17 im Bereich der Schenkel des Schiebeelements 7 Vertiefungen auf, in denen die Schenkel des Schieberelements 7 geführt sind.

Weiter sind Noppen 77 vorgesehen, die unterhalb des Schieberelements 7 mit dem Gehäuseteil 17 verbunden sind und ein Ausbrechen der Schenkel des Schieberelements 7 verhindern. Die Feder 71 wird von beidseitig des Schieberelements mit dem Gehäuseteil 17 verbundenen Noppen 72 gehalten und übt eine in Richtung des Hakenelements 10 gerichtete Federkraft auf das Schieberelement 7 aus. Die dem Hakenelement 10 gegenüberliegende Seite des Schieberelements 7 sowie die Noppen 72 weisen jeweils eine Nut zur Führung der Feder 71 auf.

Die beiden Betätigungselemente 61 und 62 weisen jeweils zwei Langlöcher 64 auf, durch die hakenförmige mit dem Gehäuse 17 verbundene Führungselemente 63 greifen. Auf der Unterseite des Gehäuses 17 sind weiter zwei Halterungen 65 ausgeformt, die der Abstützung der Schraubenfedern 66 und 67 dienen. Durch die Schraubenfedern 66 und 67 wird jeweils eine in Richtung der Außenseite des Grundteils gerichtete Kraft auf die Betätigungselemente 61 und 62 ausgeübt.

Auf der Oberseite der Betätigungselemente 61 und 62 sind die Hakenelemente 32 bzw. 31 ausgeformt, so daß sich die Hakenelemente 32 und 31 entsprechend der Bewegung der Betätigungselemente 61 bzw. 62 mitbewegen. Weiter sind die Hakenelemente 21 und 22 auf der der Unterseite des Gehäuses 17 zugewandten Oberseite des Schiebeelements 7 ausgeformt, so daß die Bewegung der Hakenelemente 21 und 22 der Bewegung des Schiebelements 7 entspricht.

Die Schenkel des Schiebeelements 7 weisen an ihren Kopfenden abgeschrägte Flächen 75 und 76 auf, die wie in Fig. 6 gezeigt, mit entsprechend abgeschrägten Flächen 68 und 69 der Betätigungselemente 61 bzw. 62 in berührender Anlage stehen. Hierdurch wird eine Querbewegung der Betätigungselemente 61 und 62 in eine Längsbewegung des Schieberelements 7 umgesetzt. Werden die Betätigungselemente 61 und 62 zusammengedrückt, so werden die hierdurch erzeugten Querkräfte durch die abgeschrägten Flächen 68, 75 sowie 69 und 76 in eine Längsbewegung des Schieberelements 7 in Richtung der vom Hakenelement 10 abgewandte Seite des Grundteils umgesetzt.

Fig. 7 verdeutlicht den verrasteten Zustand des Grundteils 1 und des Halteteils 2. Fig. 7 zeigt das Gehäuse 17 des Grundteils 1 und das Teilgehäuse 28 des Halteteils 2. Weiter sind die Betätigungselemente 61 und 62 gezeigt, an deren Oberseiten die Hakenelemente 31 und 32 ausgeformt sind. Die Hakenelemente 31 und 32 sind hierbei durch die Ausnehmungen 33 bzw. 34 des Teilgehäuses 28 geführt, wodurch das Teilgehäuse 28 mit dem Gehäuse 17 verrastet ist. Weiter sind in Fig. 7 die Schraubenfedern 66 und 67 gezeigt, die zum einen an den an der Unterseite des Gehäuses 17 ausgeformten Halterungen 65 und zum anderen an den Betätigungselementen 61 und 62 angreifen.

Weiter ist es auch möglich, die Hakenelemente nach Fig. 1 auf dem Halteteil der Haltevorrichtung und die zugeordneten Ausnehmungen nach Fig. 2 auf dem Grundteil der Haltevorrichtung anzuordnung, und damit die mechanischen Verbindungselemente von Halteteil und Grundteil zu vertauschen. Gemäß dieser Ausführungsform wäre somit auch die mechanische Anordnung nach Fig. 6 im Halteteil und nicht im Grundteil angeordnet. Weiter ergeben sich hier dieselben Ausgestaltungsmöglichkeiten wie in der Beschreibung zu den Figuren 1 bis 7.

## Patentansprüche

1. Haltevorrichtung zur mechanischen und elektrischen Verbindung einer mobilen Benutzereinrichtung, insbesondere eines Mobilfunktelefons oder eines PDA's, mit einem Fahrzeug, wobei die Haltevorrichtung ein Grundteil (1) zur permanenten Befestigung im Fahrzeug und ein Halteteil (2) zur Aufnahme der mobilen Benutzereinrichtung aufweist, wobei
das Grundteil (1) mindestens ein starres erstes Hakenelement (10) und mindestens ein gefedertes zweites Hakenelement (21, 22) aufweist, die voneinander beabstandet nach oben wegstehend auf der dem Halteteil (2) zugewandten Oberseite des Grundteils (1) angeordnet sind, wobei das Grundteil (1) ein elektrisches Verbindungselement (4) zur elektrischen Verbindung des Grundteils mit dem Halteteil (2) aufweist, das auf der dem Halteteil (2) zugewandten Oberseite des Grundteils (1) zwischen dem mindestens einen starren ersten Hakenelement (10) und dem mindestens einen gefederten zweiten Hakenelement (21, 22) angeordnet ist, wobei die dem Grundteil (1) zugewandte Unterseite des Halteteils (2) mindestens eine erste Ausnehmung (11) zur Verrastung mit einem ersten Hakenelement (10) und mindestens eine von dieser beabstandet angeordnete zweite Ausnehmung (23, 24) zur Verrastung mit einem zweiten Hakenelement aufweist, wobei das Halteteil (2) ein elektrisches Verbindungselement (5) zur elektrischen Verbindung des Halteteils (2) mit dem Grundteil (1) aufweist, das auf der dem Grundteil zugewandten Unterseite des Halteteils (2) zwischen der mindestens einen ersten Ausnehmung (11) und der mindestens einen zweiten Ausnehmung (23, 24) angeordnet ist, **dadurch gekennzeichnet daß** das Grundteil (1) mindestens ein drittes gefedertes Hakenelement (32, 31) aufweist, das zwischen dem ersten Hakenelement (10) und dem elektrischen Verbindungselement (4) angeordnet ist und daß das Halteteil (2) mindestens eine dritte Ausnehmung (33, 34) aufweist, die zwischen der ersten Ausnehmung (11) und dem elektrischen Verbindungselement (5) angeordnet ist.

2. Grundteil (1) einer Haltevorrichtung zur mechanischen und elektrischen Verbindung einer mobilen Benutzereinrichtung, insbesondere eines Mobilfunktelefons oder eines PDA's, mit einem Fahrzeug, wobei das Grundteil (1) zur permanenten Befestigung im Fahrzeug und ein Halteteil zur Aufnahme der mobilen Benutzereinrichtung vorgesehen ist,
**dadurch gekennzeichnet,**
**daß** das Grundteil (1) mindestens ein starres erstes Hakenelement (10) und mindestens ein gefedertes zweites Hakenelement (21, 22) aufweist, die voneinander beabstandet nach oben wegstehend auf der dem Halteteil (2) zugewandten Oberseite des Grundteils (1) angeordnet sind, daß das Grundteil (1) ein elektrisches Verbindungselement (4) zur elektrischen Verbindung des Grundteils (1) mit dem Halteteil (2) aufweist, das auf der dem Halteteil (2) zugewandten Oberseite des Grundteils zwischen dem mindestens einem starren ersten Hakenelement (10) und dem mindestens einen gefederten zweiten Hakenelement (21, 22) angeordnet ist, und daß das Grundteil (1) mindestens ein drittes gefedertes Hakenelement (32, 31) aufweist, das zwischen dem ersten Hakenelement (10) und dem elektrischen Verbindungselement (4) angeordnet ist.

3. Grundteil (1) nach Anspruch 2,
**dadurch gekennzeichnet,**
**daß** das Grundteil ein mittig angeordnetes erstes Hakenelement (10) und zwei beabstandet zueinander angeordnete zweite Hakenelemente (21, 22) aufweist.

4. Grundteil (1) nach Anspruch 2 oder 3,
**dadurch gekennzeichnet,**
**daß** das mindestens eine zweite Hakenelement (21, 22) in Längsrichtung des Grundteils (1) beweglich federnd gelagert ist und daß die Haken des ersten Hakenelements (10) und die Haken des zweiten Hakenelements (21, 22) gegenläufig orientiert sind.

5. Grundteil (1) nach einem der Ansprüche 2 bis 4,
**dadurch gekennzeichnet,**
**daß** das mindestens eine dritte Hakenelement (31, 32) quer zur Längsrichtung des Grundteils (1) beweglich federnd gelagert ist.

6. Grundteil (1) nach einem der Ansprüche 2 bis 5,
**dadurch gekennzeichnet,**
**daß** das mindestens eine dritte Hakenelement (31, 32) um 90° gegenüber dem zweiten Hakenelement (21, 22) versetzt beweglich federnd gelagert ist.

7. Grundteil (1) nach einem der Ansprüche 2 bis 6,
**dadurch gekennzeichnet,**
**daß** das Grundteil (1) mindestens ein zweites Hakenelement (21, 22) aufweist, das in Längsrichtung des Grundteils (1) beweglich federnd gelagert ist, und zwei dritte Hakenelemente (31, 32) aufweist, die gegenläufig quer zur Längsrichtung des Grundteils (1) beweglich federnd gelagert sind.

8. Grundteil (1) nach einem der Ansprüche 2 bis 7,
**dadurch gekennzeichnet,**
**daß** das Grundteil (1) zwei zweite Hakenelemente (21, 22) aufweist, die in unmittelbarer Nähe der Ecken des elektrischen Verbindungselements (4) angeordnet sind.

9. Grundteil (1) nach einem der Ansprüche 2 bis 8,
**dadurch gekennzeichnet,**
**daß** das Grundteil (1) zwei dritte federnde Hakenelemente (31, 32) aufweist, die einander gegenüberliegend in unmittelbarer Nähe der Längskanten des Grundteils (1) angeordnet sind.

10. **Grundteil (1) nach einem der Ansprüche 2 bis 9,**
**dadurch gekennzeichnet,**
**daß** das Grundteil (1) ein in Längsrichtung des Grundteils (1) bewegliches, federnd gelagertes Schieberelement (7) aufweist, das mit dem mindestens einen zweiten Hakenelement (21, 22) verbunden ist und daß das Grundteil (1) mindestens ein quer zur Längsrichtung des Grundteils (1) bewegliches, federnd gelagertes Betätigungselement (61, 62) aufweist, wobei das Schiebeelement (7) und das Betätigungselement (61, 62) miteinander in berührender Anlage stehende abgeschrägte Flächen (68, 75, 69, 76) aufweisen, so daß eine Querbewegung des mindestens einen Betätigungselements (61, 62) in eine Längsbewegung des Schieberelements (7) umgesetzt wird.

11. Grundteil (1) nach Anspruch 10,
**dadurch gekennzeichnet,**
**daß** ein drittes Hakenelement (31, 32) mit dem mindestens einen Betätigungselement (61, 62) verbunden ist.

12. Grundteil (1) nach Anspruch 10,
**dadurch gekennzeichnet,**
**daß** das Grundteil (1) zwei dritte Hakenelemente (31, 32) und zwei gegenläufig angeordnete Betätigungselemente (61, 62) aufweist, wobei das eine dritte Hakenelement (32) mit dem einen Betätigungselement (61) und das andere dritte Hakenelement (32) mit dem anderen Betätigungselement (62) verbunden ist und hierbei die Haken der beiden Hakenelemente (31, 32) gegenläufig orientiert sind.

13. Grundteil (1) nach einem der Ansprüche 10 bis 12,
**dadurch gekennzeichnet,**
**daß** das Grundteil (1) eine erste Feder (71) aufweist, die auf das Schieberelement eine in Richtung des ersten, festen Hakenelements (10) gerichtete Kraft ausübt, und daß das Grundteil (1) eine zweite Feder (66, 67) aufweist, die auf das mindestens eine Betätigungselement (61, 62) eine in Richtung der Außenseite des Grundteils (1) gerichtete Kraft ausübt.

14. Haltevorrichtung nach Anspruch 1,
**dadurch gekennzeichnet,**
**daß** die elektrischen Verbindungselemente (4, 5) mehrere in einer oder mehreren Reihen angeordnete elektrisch leitfähige Kontaktelemente (41) aufweisen, wobei die Kontaktelemente (41) des Verbindungselements (4) des Grundteils (1) und die Kontaktelemente des Verbindungselements (5) des Halteteils (2) bei Verrastung des Grundteils (1) und des Halteteils (2) miteinander fluchtend an ihren einander zugewandten Stirnenden in berührender Anlage stehen.

15. Haltevorrichtung nach Anspruch 1 oder 14,
**dadurch gekennzeichnet,**
**daß** die elektrischen Verbindungselemente (4, 5) zur Übertragung von HF und NF Signalen verwendet werden.

16. Haltevorrichtung nach Anspruch 1,
**dadurch gekennzeichnet,**
**daß** zwei oder mehr benachbarte Kontaktelemente (41) HF Signale übertragen und ein oder mehrere der übrigen Kontaktelemente (41) NF Signale übertragen oder der Stromversorgung dienen.

17. Haltevorrichtung nach einer der Ansprüche 14 bis 16,
**dadurch gekennzeichnet,**
**daß** das elektrische Verbindungselement (4, 5) mehrere elektrisch leitfähige Kontaktelemente (41) in einer dreireihigen Anordnung aufweist.

18. Haltevorrichtung nach einem der Ansprüche 14 bis 17,
**dadurch gekennzeichnet,**
**daß** das elektrische Verbindungselement (4) des Grundteils (1) mehrere elektrisch leitfähige Kontaktelemente (41) aufweist, die in ihren Stirnflächen Kontaktflächen ausbilden, und daß das elektrische Verbindungselement (5) des Halteteils mehrere elektrisch leitfähige Kontaktelemente aufweist, die in Form von Kontaktstiften ausgebildet sind.

19. Haltevorrichtung nach einem der Ansprüche 14 bis 18,
**dadurch gekennzeichnet,**
**daß** die Kontaktelemente des Verbindungselements (5) des Halteteils federnd gelagert sind.

20. Haltevorrichtung nach einem der Ansprüche 14 bis 19,
**dadurch gekennzeichnet,**
**daß** das Grundteil (1) und das Halteteil (2) ein oder mehrere Zentrierelemente (12, 11) bzw. zugeordnete Zentrierausnehmungen (26, 25) aufweisen.

21. Halteteil (2) einer Haltevorrichtung zur mechanischen und elektrischen Verbindung einer mobilen Benutzereinrichtung, insbesondere eines Mobiltelefons oder eines PDA's, mit einem Fahrzeug, wobei ein Grundteil (1) zur permanenten Befestigung im Fahrzeug und das Halteteil (2) zur Aufnahme der mobilen Benutzereinrichtung vorgesehen ist, wobei
die dem Grundteil (1) zugewandte Unterseite des Halteteils (2) mindestens eine erste Ausnehmung (11) zur Verrastung mit einem ersten Hakenelement (10) des Grundteils und mindestens eine von dieser beabstandet angeordnete zweite Ausnehmung (23, 24) zur Verrastung mit einem zweiten Hakenelement (22, 21) des Grundteils (1) aufweist, wobei das Halteteil (2) ein elektrisches Verbindungselement (5) zur elektrischen Verbindung des Halteteils (2) mit dem Grundteil (1) aufweist, das auf der dem Grundteil (1) zugewandten Unterseite des Halteteils (2) zwischen der mindestens einen Ausnehmung (11) und der mindestens einen zweiten Ausnehmung (23, 24) angeordnet ist, **dadurch gekennzeichnet daß** das Halteteil (2) mindestens eine dritte Ausnehmung (33, 34) aufweist, die zwischen der ersten Ausnehmung (11) und dem elektrischen Verbindungselement (5) angeordnet ist.

22. Halteteil (2) nach Anspruch 21,
**dadurch gekennzeichnet,**
**daß** das Halteteil (2) zwei zweite Ausnehmungen (23, 24) aufweist, die in unmittelbarer Nähe der Ecken des elektrischen Verbindungselements (5) angeordnet sind.

23. Halteteil (2) nach Anspruch 21 oder 22,
**dadurch gekennzeichnet,**
**daß** das Halteteil (2) zwei dritte Ausnehmungen (33, 34) aufweist, die einander gegenüberliegend in unmittelbarer Nähe der Längskanten des Halteteils (2) angeordnet sind.

## Claims

1. A retaining device for the mechanical and electrical connection of a mobile user device, in particular a mobile radio telephone or a PDA, to a vehicle, wherein the retaining device has a base part (1) for permanent fastening in the vehicle, and a retaining part (2) for receiving the mobile user device, therein the base part (1) has at least one rigid first hook element (10) and at least one sprung second hook element (21, 22), which elements are arranged, spaced apart and projecting upwards, on the upper side of the base part (1) facing the retaining part (2), wherein the base part (1) has an electrical connecting element (4) for electrically connecting the base part to the retaining part (2), which element is arranged on the upper side of the base part (1) facing the retaining part (2) between the at least one rigid first hook element (10) and the at least one sprung second hook element (21, 22), wherein the underside of the retaining part (2) facing the base part (1) has at least one first recess (11) for interlocking with a first hook element (10), and at least one second recess (23, 24) arranged at a distance from it, for interlocking with a second hook element, and wherein the retaining element (2) has an electrical connecting element (5) for electrically connecting the retaining part (2) to the base part (1), which element is arranged on the underside of the retaining part (2) facing the base part between the at least one first recess (11) and the at least one second recess (23, 24), **characterised in that** the base part (1) has at least one third sprung hook element (32, 31), which is arranged between the first hook element (10) and the electrical connection element (4), and **in that** the retaining part (2) has at least one third recess (33, 34) which is arranged between the first recess (11) and the electrical connecting element (5).

2. A base part (1) of a retaining device for the mechanical and electrical connection of a mobile user device, in particular a mobile radio telephone or a PDA, to a vehicle, wherein the base part (1) is provided for permanent fastening in the vehicle and a retaining part is provided for receiving the mobile user device, **characterised in that** the base part (1) has at least one rigid first hook element (10) and at least one sprung second hook element (21, 22), which elements are arranged, spaced apart and projecting upwards, on the upper side of the base part (1) facing the retaining part (2), **in that** the base part (1) has an electrical connecting element (4) for electrically connecting the base part (1) to the retaining part (2), which element is arranged on the upper side of the base part facing the retaining part (2) between the at least one rigid first hook element (10) and the at least one sprung second hook element (21, 22), and **in that** the base part (1) has at least one third sprung hook element (32, 31) which is arranged between the first hook element (10) and the electrical connecting element (4).

3. The base part (1) according to Claim 2, **characterised in that** the base part has a centrally arranged first hook element (10) and two second hook elements (21, 22) arranged so that they are spaced apart.

4. The base part (1) according to Claim 2 or 3, **characterised in that** at least one second hook element (21, 22) is movably spring mounted in the longitudinal direction of the base part (1), and **in that** the hooks of the first hook element (10) and the hooks of the second hook element (21, 22) are opposed to each other.

5. The base part (1) according to one of Claims 2 to 4, **characterised in that** at least one third hook element (31, 32) is movably spring mounted transversely to the longitudinal direction of the base part (1).

6. The base part (1) according to one of Claims 2 to 5, **characterised in that** at least one third hook element (31, 32) is movably spring mounted and offset 90° with respect to the second hook element (21, 22).

7. The base part (1) according to one of Claims 2 to 6, **characterised in that** the base part (1) has at least one second hook element (21, 22) which is movably spring mounted in the longitudinal direction of the base part (1), and two third hook elements (31, 32) which are movably spring mounted in the opposite direction transversely to the longitudinal direction of the base part (1).

8. The base part (1) according to one of Claims 2 to 7, **characterised in that** the base part (1) has two second hook elements (21, 22) which are arranged in the immediate vicinity of the corners of the electrical connecting element (4).

9. The base part (1) according to one of Claims 2 to 8, **characterised in that** the base part (1) has two third elastic hook elements (31, 32) which are arranged opposite each other in the immediate vicinity of the longitudinal edges of the base part (1).

10. The base part (1) according to one of Claims 2 to 9, **characterised in that** the base part (1) has a spring mounted slide element (7) which is movable in the longitudinal direction of the base part (1) and which is connected to the at least one second hook element (21, 22), and **in that** the base part (1) has at least one spring mounted actuating element (61, 62) that is movable transversely to the longitudinal direction of the base part (1), wherein the slide element (7) and the actuating element (61, 62) have bevelled surfaces (68, 75, 69, 76) that are in contact with each other, so that a transverse movement of the at least one actuating element (61, 62) is converted to a longitudinal movement of the slide element (7).

11. The base part (1) according to Claim 10, **characterised in that** a third hook element (31, 32) is connected to the at least one actuating element (61, 62).

12. The base part (1) according to Claim 10, **characterised in that** the base part (1) has two third hook elements (31, 32) and two actuating elements (61, 62) arranged opposite them, wherein the one third hook element (32) is connected to the one actuating element (61), and the other third hook element (32) is connected to the other actuating element (62), and the hooks of the two hook elements (31, 32) are here arranged opposite each other.

13. The base part (1) according to one of Claims 10 to 12, **characterised in that** the base part (1) has a first spring (71) which exerts a force onto the slide element in the direction of the first, fixed hook element (10), and **in that** the base part (1) has a second spring (66, 67) which exerts a force onto at least one actuating element (61, 62) in the direction of the outside of the base part (1).

14. A retaining device according to Claim 1, **characterised in that** the electrical connecting elements (4, 5) have a plurality of electrically conducting contact elements (41) arranged in one or a plurality of rows, wherein the contact elements (41) of the connecting element (4) of the base part (1) and the contact elements of the connecting element (5) of the retaining part (2) are in flush contact with each other at their front ends facing each other.

15. The retaining device according to Claim 1 or 14, **characterised in that** the electrical connecting elements (4, 5) are used to transmit HF and LF signals.

16. The retaining device according to Claim 1, **characterised in that** two or more adjacent contact elements (41) transmit HF signals and one or a plurality of the remaining contact elements (41) transmit LF signals or serve to supply current.

17. The retaining device according to one of Claims 14 to 16, **characterised in that** the electrical connecting element (4, 5) has a plurality of electrically conducting contact elements (41) in a three-row arrangement.

18. The retaining device according to one of Claims 14 to 17, **characterised in that** the electrical connecting element (4) of the basic part (1) has a plurality of electrically conducting contact elements (41) which form contact surfaces on their end faces, and **in that** the electrical connecting element (5) of the retaining part has a plurality of electrically conducting contact elements which are designed in the form of contact pins.

19. The retaining device according to one of Claims 14 to 18, **characterised in that** the contact elements of the connecting element (5) of the retaining part are spring mounted.

20. The retaining device according to one of Claims 14 to 19, **characterised in that** the base part (1) and the retaining part (2) have one or a plurality of centring elements (12, 11) or associated centring recesses (26, 25).

21. A retaining part (2) of a retaining device for the mechanical and electrical connection of a mobile user device, in particular a mobile telephone or a PDA, to a vehicle, wherein a base part (1) is provided for permanent fastening in the vehicle and the retaining part (2) is provided for receiving the mobile user device, wherein the underside of the retaining part (2) facing the base part (2) has at least one first recess (11) for interlocking to a first hook element (10) of the base part and at least one second recess (23, 24) arranged apart from it for interlocking with a second hook element (22, 21) of the base part (1), wherein the retaining part (2) has an electrical connecting element (5) for electrically connecting the retaining part (2) to the base part (1), which element is arranged on the underside of the retaining part (2) facing the base part (1) between the at least one recess (11) and the at last one second recess (23, 24), **characterised in that** the retaining part (2) has at least one third recess (33, 34) which is arranged between the first recess (11) and the electrical connecting element (5).

22. The retaining part (2) according to Claim 21, **characterised in that** the retaining part (2) has two second recesses (23, 24) which are arranged in the immediate vicinity of the corners of the electrical connecting element (5).

23. The retaining part (2) according to Claim 21 or 22, **characterised in that** the retaining part (2) has two third recesses (33, 34) which are arranged opposite each other in the immediate vicinity of the longitudinal edges of the retaining part (2).

## Revendications

1. Dispositif de maintien destiné à la connexion mécanique et électrique d'un équipement mobile d'utilisateur, en particulier d'un téléphone mobile ou d'un PDA, avec un véhicule, du type selon lequel le dispositif de maintien présente une partie de base (1) destinée à la fixation permanente dans le véhicule et une partie de maintien (2) pour le logement de l'équipement mobile d'utilisateur, du type selon lequel la partie de base (1) présente au moins un premier élément d'accrochage (10) rigide et au moins un second élément d'accrochage (21, 22) élastique, qui sont tout en partant vers le haut, en disposition mutuelle espacée sur la face supérieure de la partie de base (1) et dirigée vers la partie de maintien (2), du type selon lequel la partie de base (1) présente un élément de connexion électrique (4), qui est destiné à la connexion électrique de la partie de base avec la partie de maintien (2) et qui est disposé sur la face supérieure de la partie de base (1) et dirigée vers la partie de maintien (2), entre l'un au moins des premiers éléments d'accrochage (10) rigides et l'un au moins des seconds éléments d'accrochage (21, 22) élastiques, du type selon lequel la face inférieure de la partie de maintien (2) et dirigée vers la partie de base (1) présente au moins un premier évidement (11) destiné à l'enclipsage avec un premier élément d'accrochage (10), ainsi qu'au moins un second évidement (23, 24) espacé dudit premier évidement et destiné à l'enclipsage avec un second élément d'accrochage, du type selon lequel la partie de maintien (2) présente un élément de connexion électrique (5), qui est destiné à la connexion électrique de la partie de maintien (2) avec la partie de base (1) et qui est disposé sur la face inférieure de la partie de maintien (2) et dirigée vers la partie de base (1), entre l'un au moins des premiers évidements (11) et l'un au moins des seconds évidements (23, 24),
**caractérisé en ce que** la partie de base (1) présente au moins un troisième élément d'accrochage (32, 31) élastique, qui est disposé entre le premier élément d'accrochage (10) et l'élément de connexion électrique (4) et **en ce que** la partie de maintien (2) présente au moins un troisième évidement (33, 34), qui est disposé entre le premier évidement (11) et l'élément de connexion électrique (5).

2. Partie de base (1) d'un dispositif de maintien destiné à la connexion mécanique et électrique d'un équipement mobile d'utilisateur, en particulier d'un téléphone mobile ou d'un PDA, avec un véhicule, du type selon lequel la partie de base (1) est prévue pour la fixation permanente dans le véhicule tandis qu'une partie de maintien est prévue pour le logement de l'équipement mobile d'utilisateur,
**caractérisée en ce que**
la partie de base (1) présente au moins un premier élément d'accrochage (10) rigide et au moins un second élément d'accrochage (21, 22) élastique, qui sont, tout en partant vers le haut, en disposition mutuelle espacée sur la face supérieure de la partie de base (1) et dirigée vers la partie de maintien (2), **en ce que** la partie de base (1) présente un élément de connexion électrique (4), qui est destiné à la connexion électrique de la partie de base (1) avec la partie de maintien (2) et qui est disposé sur la face supérieure de la partie de base (1) et dirigée vers la partie de maintien (2), entre l'un au moins des premiers éléments d'accrochage (10) rigides et l'un au moins des seconds éléments d'accrochage (21, 22) élastiques, et **en ce que** la partie de base (1) présente au moins un troisième élément d'accrochage (32, 31) élastique, qui est disposé entre le premier élément d'accrochage (10) et l'élément de connexion électrique (4).

3. Partie de base (1) selon la revendication 2,
**caractérisée en ce que**
la partie de base présente un premier élément d'accrochage (10) en disposition médiane et deux seconds éléments d'accrochage (21, 22) en disposition mutuelle espacée.

4. Partie de base (1) selon la revendication 2 ou 3,
**caractérisée en ce que**
l'un au moins des seconds éléments d'accrochage (21, 22) est monté de manière élastique et mobile selon la direction longitudinale de la partie de base (1) et **en ce que** les crochets du premier élément d'accrochage (10) et les crochets du second élément d'accrochage (21, 22) ont une orientation respective en opposition.

5. Partie de base (1) selon l'une des revendications 2 à 4,
**caractérisée en ce que**
l'un au moins des troisièmes éléments d'accrochage (31, 32) est monté de manière élastique et mobile transversalement à la direction longitudinale de la partie de base (1).

6. Partie de base (1) selon l'une des revendications 2 à 5,
**caractérisée en ce que**
l'un au moins des troisièmes éléments d'accrochage (31, 32) est monté de manière élastique et mobile selon un angle de 90° décalé vis-à-vis du second élément d'accrochage (21, 22).

7. Partie de base (1) selon l'une des revendications 2 à 6,
**caractérisée en ce que**
la partie de base (1) présente au moins un second élément d'accrochage (21, 22), qui est monté de manière élastique et mobile selon la direction longitudinale de la partie de base, et présente deux troisièmes éléments d'accrochage (31, 32) qui sont montés de manière élastique, mobiles transversalement à la direction longitudinale de la partie de base (1) et respectivement orientés en opposition.

8. Partie de base (1) selon l'une des revendications 2 à 7,
**caractérisée en ce que**
la partie de base (1) présente deux seconds éléments d'accrochage (21, 22) qui sont disposés au voisinage immédiat des angles ou coins de l'élément de connexion électrique (4).

9. Partie de base (1) selon l'une des revendications 2 à 8,
**caractérisée en ce que**
la partie de base (1) présente deux troisièmes éléments d'accrochage (31, 32) élastiques, qui sont en disposition mutuelle opposée, au voisinage immédiat des arêtes longitudinales de la partie de base (1).

10. Partie de base (1) selon l'une des revendications 2 à 9,
**caractérisée en ce que**
la partie de base (1) présente un élément coulissant (7) monté de manière élastique, mobile selon la direction longitudinale de la partie de base (1) et relié avec l'un au moins des seconds éléments d'accrochage (21, 22), et **en ce que** la partie de base (1) présente au moins un élément d'actionnement (61, 62) monté de manière élastique et mobile transversalement à la direction longitudinale de la partie de base (1), l'élément coulissant (7) et l'élément d'actionnement (61, 62) présentant l'un par rapport à l'autre des portées biseautées (68, 75, 69, 76) et à montage en affleurement ou contact, de telle façon qu'un déplacement transversal de l'un au moins des éléments d'actionnement (61, 62) soit converti en un déplacement longitudinal de l'élément coulissant (7).

11. Partie de base (1) selon la revendication 10,
**caractérisée en ce que**
un troisième élément d'accrochage (31, 32) est relié avec l'un au moins des éléments d'actionnement (61, 62).

12. Partie de base (1) selon la revendication 10,
**caractérisée en ce que**
la partie de base (1) présente deux troisièmes éléments d'accrochage (31, 32) et deux éléments d'actionnement (61, 62) qui sont en disposition mutuelle opposée, l'un des troisièmes éléments d'accrochage (32) étant relié à l'un des éléments d'actionnement (61) et l'autre troisième élément d'accrochage (32) étant relié à l'autre élément d'actionnement (62) tandis que les crochets des deux éléments d'accrochage (31, 32) sont en orientation mutuelle opposée.

13. Partie de base (1) selon l'une des revendications 10 à 12,
**caractérisée en ce que**
la partie de base (1) présente un premier ressort (71), qui exerce sur l'élément coulissant une force dirigée en direction du premier élément d'accrochage (10) fixe, et **en ce que** la partie de base (1) présente un second ressort (66, 67), qui exerce sur l'un au moins des éléments d'actionnement (61, 62) une force dirigée en direction de la face externe de la partie de base (1).

14. Dispositif de maintien selon la revendication 1,
**caractérisé en ce que**
les éléments de connexion électrique (4, 5) présentent plusieurs éléments de contact (41) électriquement conducteurs et disposés en une ou plusieurs rangées, les éléments de contact (41) de l'élément de connexion électrique (4) de la partie de base (1) et les éléments de contact de l'élément de connexion électrique (5) de la partie de maintien (2) se trouvant, lors de l'enclipsage mutuel de la partie de base (1) et de la partie de maintien (2), selon un positionnement en affleurement, en présentant conjointement un profil fuyant au niveau de leurs extrémités frontales situées en regard.

15. Dispositif de maintien selon la revendication 1 ou 14,
**caractérisé en ce que**
les éléments de connexion électrique (4, 5) sont utilisés pour la transmission de signaux HF et BF.

16. Dispositif de maintien selon la revendication 1,
**caractérisé en ce que**
deux ou plus de deux éléments de contact (41) voisins transmettent des signaux HF et un ou plusieurs des éléments de contact (41) restants transmettent des signaux BF ou servent à l'alimentation en courant.

17. Dispositif de maintien selon l'une des revendications 14 à 16,
**caractérisé en ce que**
l'élément de connexion électrique (4, 5) présente plusieurs éléments de contact (41) électriquement conducteurs et disposés selon un arrangement en trois rangées.

18. Dispositif de maintien selon l'une des revendications 14 à 17,
**caractérisé en ce que**
l'élément de connexion électrique (4) de la partie de base (1) présente plusieurs éléments de contact (41) électriquement conducteurs, qui ménagent des portées de contact dans leurs portées frontales, et **en ce que** l'élément de connexion électrique (5) de la partie de maintien présente plusieurs éléments de contact électriquement conducteurs, qui sont réalisés sous forme de plots de contact.

19. Dispositif de maintien selon l'une des revendications 14 à 18,
**caractérisé en ce que**
les éléments de contact de l'élément de connexion électrique (5) de la partie de maintien sont montés de manière élastique.

20. Dispositif de maintien selon l'une des revendications 14 à 19,
**caractérisé en ce que**
la partie de base (1) et la partie de maintien (2) présentent un ou plusieurs éléments de centrage (12, 11), respectivement d'évidements de centrage (26, 25) associés.

21. Partie de maintien (2) d'un dispositif de maintien destiné à la connexion mécanique et électrique d'un équipement mobile d'utilisateur, en particulier d'un téléphone mobile ou d'un PDA, avec un véhicule, du type selon lequel sont prévues une partie de base (1) destinée à la fixation permanente dans le véhicule et la partie de maintien (2) pour le logement de l'équipement mobile d'utilisateur, du type selon lequel la face inférieure de la partie de maintien (2) en regard de la partie de base (1) présente un premier évidement (11) destiné à l'enclipsage avec un premier élément d'accrochage (10) de la partie de base (1), ainsi qu'au moins un second évidement (23, 24) espacé par rapport au premier évidement et destiné à l'enclipsage avec un second élément d'accrochage (22, 21) de la partie de base (1) et du type selon lequel la partie de maintien (2) présente un élément de connexion électrique (5), qui est destiné à la connexion électrique de la partie de maintien (2) avec la partie de base (1) et qui est disposé sur la face inférieure située en regard de la partie de maintien (2), entre l'un au moins des premiers évidements (11) et l'un au moins des seconds évidements (23, 24),
**caractérisée en ce que** la partie de maintien (2) présente au moins un troisième évidement (33, 34), qui est disposé entre le premier évidement (11) et l'élément de connexion électrique (5).

22. Partie de maintien (2) selon la revendication 21,
**caractérisée en ce que**
la partie de maintien (2) présente deux seconds évidements (23, 24) qui sont disposés au voisinage immédiat des angles de l'élément de connexion électrique (5).

23. Partie de maintien (2) selon la revendication 21 ou 22,
**caractérisée en ce que**
la partie de maintien (2) présente deux troisièmes évidements (33, 34) qui sont en disposition mutuelle opposée, au voisinage immédiat des arêtes longitudinales de la partie de maintien (2).
